# EUROPÄISCHE PATENTSCHRIFT

(11) **EP 1 559 944 B1**
(45) Veröffentlichungstag und Bekanntmachung des Hinweises auf die Patenterteilung: **07.02.2007**
(21) Anmeldenummer: 04029123.9
(22) Anmeldetag: 09.12.2004
(51) Int. Cl.: F16L 37/098

(54) **Steckkupplung zum Verbinden einer Fluidleitung mit einem Rohr**
Connector for connecting a fluid conduit to a pipe
Raccord pour connecter un conduit de fluide à un tuyau

(30) Priorität: 29.01.2004 DE 102004004364
(43) Veröffentlichungstag der Anmeldung: 03.08.2005
(73) Patentinhaber: Rasmussen GmbH, 63477 Maintal (DE)
(72) Erfinder: Bauer, Andreas, 63477 Maintal (DE); Strauss, Oliver, 61130 Nidderau (DE); Koch, Reiner, 63785 Obernburg (DE); Becker, Sigrid, 63911 Klingenberg (DE)
(74) Vertreter: Knoblauch, Andreas

(56) Entgegenhaltungen:
- EP-A- 1 070 899
- DE-A1- 19 653 866
- DE-A1- 19 727 518
- DE-C1- 4 429 498
- DE-U1- 9 405 775

## Beschreibung

Die Erfindung bezieht sich auf eine Steckkupplung zum Verbinden einer Fluidleitung mit einem Rohr, das eine sich in Umfangsrichtung erstreckende Halterippe aufweist, wobei die Steckkupplung ein Rohrstück aufweist, dessen einer Endabschnitt mit der Fluidleitung verbindbar ist und dessen anderer Endabschnitt mit dem Rohr zusammensteckbar und mit einem ersten Kupplungsringteil eines Kupplungsrings verbindbar ist, das durch elastische Haltearme mit einem unrunden, elastisch aufweitbaren zweiten Kupplungsringteil verbunden ist, der über einen vorbestimmten Umfangswinkelbereich eines Umkreises des Rohrstücks verteilte Rastabschnitte aufweist, die beim Zusammenstecken von Rohr und Rohrstück über die Halterippe, unter Aufweitung des zweiten Kupplungsringteils, hinweggleiten und hinter der Halterippe einrasten, wobei zwischen den Rastabschnitten des zweiten Kupplungsringteils liegende Teile nach außen gewölbt sind.

Bei einer bekannten Steckkupplung dieser Art (DE 44 29 498 C1 oder der EP 1 070 899 A2, Fig. 12) hat der Kupplungsringteil eine etwa ovale oder elliptische Form. An den Enden der kleinen Ellipsenachse ist jeweils eine nach innen ragende Rastnase angeformt, die beim Zusammenstecken von Rohr und Rohrstück hinter der Halterippe einrasten. Dadurch sind dann Rohr und Rohrstück miteinander gekuppelt und das Rohr mit der am Rohrstück angebrachten Fluidleitung verbunden. Zum Lösen der Kupplung wird manuell auf die Enden der großen Ellipsenachse ein nach innen zur kleinen Ellipsenachse hin gerichteter Druck ausgeübt. Dadurch verformt sich der elastische Kupplungsringteil, so daß die große Ellipsenachse sich verkürzt und die kleine Ellipsenachse sich verlängert, bis die Rastnasen mit der Halterippe außer Eingriff gelangen und das Rohrstück aus dem Rohr herausgezogen werden kann.

Diese Art des Entkuppelns ist zwar einfach manuell durchführbar, in vielen Anwendungsfällen jedoch unerwünscht, um das gegebenenfalls sehr heiße oder umweltschädliche, durch Rohr und Fluidleitung geleitete Fluid, z.B. heißes Kühlwasser, Öl oder Kraftstoff eines Kraftfahrzeugmotors, bei dem das Rohr - im Falle von Kühlwasser - einen Anschlußstutzen am Kühler und die Fluidleitung die Kühlwasserleitung bildet, nicht austreten zu lassen.

Aus der EP 1 070 899 A2, Fig. 3A bis 3C, ist es ferner bekannt, an einem kreisförmigen Kupplungsring zwei bis vier axiale Haltearme mit radialen Rastnasen an ihren freien Enden anzuformen.

Der Erfindung liegt daher die Aufgabe zugrunde, eine Steckkupplung der eingangs genannten Art anzugeben, die sich zwar mittels eines Werkzeugs, aber nicht manuell auf einfache Weise lösen läßt, aber weiterhin leicht manuell einkuppelbar ist.

Erfindungsgemäß ist diese Aufgabe bei einer gattungsgemäßen Steckkupplung dadurch gelöst, daß der zweite Kupplungsringteil wenigstens drei Rastabschnitte aufweist und der Umfangswinkelbereich größer als 180° ist, und daß die nach außen gewölbten Teile über den Umkreis der Rastabschnitte vorstehen.

Bei dieser Lösung ist der zweite Kupplungsringteil zwar weiterhin mittels eines Spezialwerkzeugs so weit aufweitbar, daß die Rastabschnitte mit der Halterippe außer Eingriff kommen, um die Kupplung zu lösen. Allein mit der Hand stößt dies jedoch auf erhebliche Schwierigkeiten, selbst unter Zuhilfenahme beider Hände. Dagegen kann der zweite Kupplungsringteil weiterhin beim Zusammenstecken von Rohr und Rohrstück, während die Rastabschnitte über die Halterippe hinweggleiten, leicht aufgeweitet werden

Insbesondere ist das manuelle Aufweiten des zweiten Kupplungsteils dann nicht möglich, wenn vier Rastabschnitte vorgesehen sind, insbesondere wenn die Rastabschnitte gleichmäßig über den Umfangswinkelbereich verteilt sind. Erst recht dann nicht, wenn der Umfangswinkelbereich 360° beträgt.

Vorzugsweise ist dafür gesorgt, daß zwei sich diametral in Bezug auf das Rohrstück gegenüberliegende Haltearme vorgesehen sind, neben deren mit dem zweiten Kupplungsringteil verbundenen Enden jeweils einer der Rastabschnitte in Form von radial nach innen ragenden Rastnasen am Kupplungsringteil angeformt ist. Diese Rastnasen sorgen in Verbindung mit den Haltearmen für einen sicheren Zusammenhalt von Rohr und Rohrstück im eingekuppelten Zustand, da die Rastnasen auch eine Verformung des zweiten Kupplungsringteils in axialer Richtung, selbst bei Ausübung einer hohen Axialzugkraft auf Rohr und Rohrstück in entgegengesetzten Richtungen, weitgehend verhindern.

Eine einfache Formgebung des zweiten Kupplungsringteils ergibt sich, wenn zwei Rastabschnitte, die sich diametral gegenüberliegen, um 90° gegenüber den Rastnasen versetzt als bogenförmige Teile des zweiten Kupplungsringteils ausgebildet sind. Diese bogenförmigen Teile des zweiten Kupplungsringteils wirken dann selbst wie Rastnasen, ohne daß sie als ausgeprägte Rastnasen am Kupplungsringteil angeformt werden müssen.

Die Erfindung und ihre Weiterbildungen werden anhand der beiliegenden Zeichnung eines bevorzugten Ausführungsbeispiels näher beschrieben. Darin stellen dar:
- Fig. 1: einen Axialschnitt durch das erfindungsgemäße Ausführungsbeispiel der Steckkupplung im eingekuppelten Zustand,
- Fig. 2: ein Rohrstück der Steckkupplung nach Fig. 1 mit darauf formschlüssig im Rastschluß befestigtem Kupplungsring und Dichtungsringen,
- Fig. 3: die gleichen Teile, wie sie in Fig. 2 dargestellt sind, jedoch in perspektivischer Ansicht,
- Fig. 4: eine Vorderansicht des Kupplungsrings der Steckkupplung,
- Fig. 5: eine Rückansicht des Kupplungsrings der Steckkupplung und
- Fig. 6: den Kupplungsring teilweise im Axialschnitt.

Die als Ausführungsbeispiel dargestellte Steckkupplung besteht aus einem Rohrstück 1 und einem damit formschlüssig verbundenen Kupplungsring 2 sowie Dichtungsringen 3 in Form von O-Ringen. Das Rohrstück 1 und der Kupplungsring 2 sind aus thermoplastischem Kunststoff in einem Formwerkzeug hergestellt.

Die Steckkupplung dient zum Verbinden einer nicht dargestellten Fluidleitung, z.B. eines Schlauches, die mit einem gerippten Endabschnitt 1a des Rohrstücks 1, z.B. mittels einer Schlauchschelle, verbunden werden kann, mit einem Rohr 4, z.B. einem Rohrstutzen am Kühler eines Kraftfahrzeugs.

Das Rohrstück 1 hat umlaufende Nuten 5, die jeweils einen der Dichtringe 3 aufnehmen, und in dem Endabschnitt 1b eine weitere umlaufende Nut 6, in der radial nach außen ragende Zähne 7 ausgebildet sind, und einen radial nach außen vorstehenden Bund 8, der eine Seitenwand der Nut 6 begrenzt.

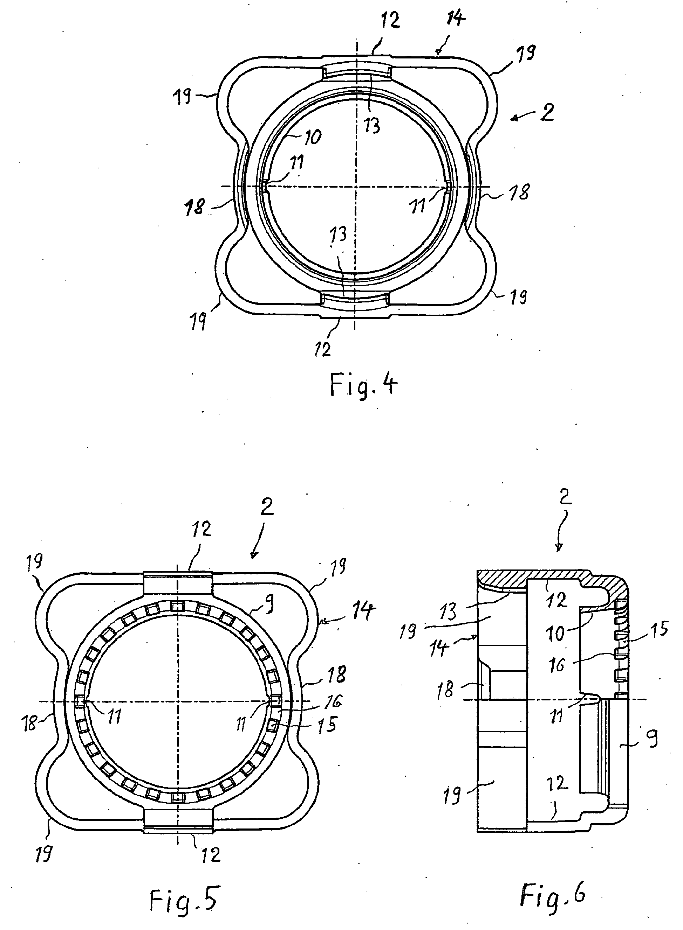

Der Kupplungsring 2, vergleiche insbesondere Fig. 5 und 6, hat an seinem einen Ende innen einen Kupplungsringteil 9 oder Bund mit einem sich in axialer Richtung erstreckenden, elastisch aufweitbaren Schurz 10, in dem zwei axiale, sich diametral gegenüberliegende Schlitze 11 ausgebildet sind, die das Aufweiten des Schurzes 10 erleichtern.

Am Kupplungsringteil 9 sind radial außen zwei sich diametral gegenüberliegende, elastisch biegsame Haltearme 12 angeformt, die in der Nähe ihres anderen Endes radial nach innen vorstehende Rastabschnitte 13 in Form von Rastnasen oder Haken aufweisen und durch einen unrunden, elastisch biegsamen Kupplungsringteil 14 verbunden sind.

Der Kupplungsringteil 9 des Kupplungsrings 2 ist auf seiner radial inneren Seite mit über seinen Umfang verteilten Zähnen 15 versehen, die zwischen sich axiale Nuten 16 begrenzen.

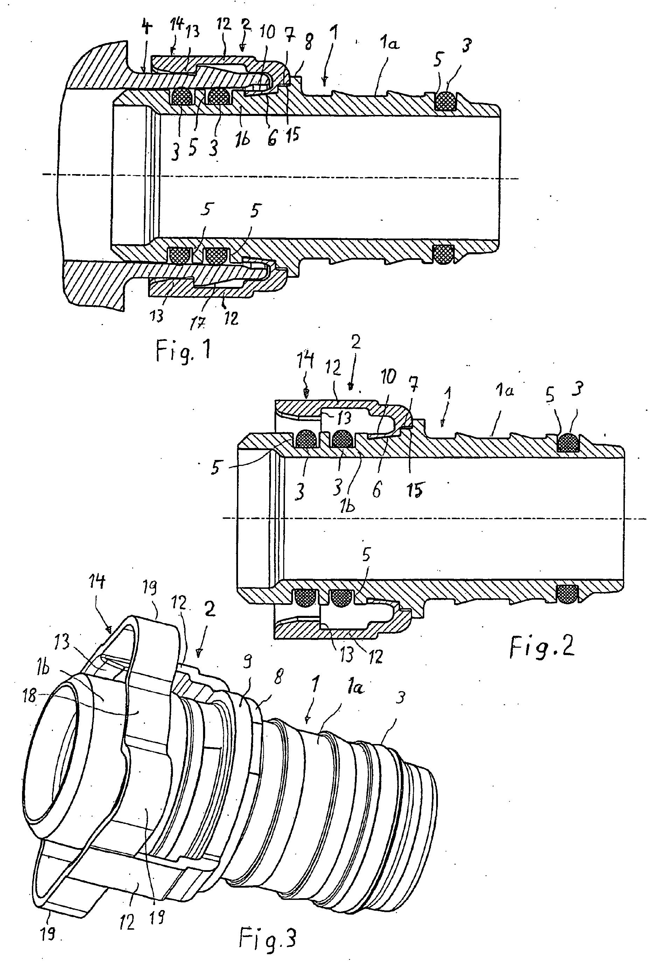

Im zusammengesteckten Zustand von Rohrstück 1 und Kupplungsring 2, in dem der Schurz 10 in die Nut 6 des Rohrstücks 1 eingerastet ist, greifen die Zähne 7 des Rohrstücks 1 (vergleiche Fig. 1 und 2) in jeweils eine der Nuten 16 zwischen den Zähnen 15 ein. Das Rohrstück 1 und der Kupplungsring 2 lassen sich daher im zusammengesteckten Zustand nicht axial auseinanderziehen und auch nicht relativ zueinander drehen. Dagegen können sie in einer Vielzahl von Drehwinkellagen entsprechend der Anzahl der Zähne 15, in einem Drehwinkelbereich von insgesamt 300° zueinander verdreht zusammengesteckt werden.

Das Rohr 4 hat in seinem Endabschnitt, der mit dem Endabschnitt 1b des Rohrstücks 1 zusammengesteckt wird, wie es in Fig. 1 dargestellt ist, eine außen umlaufende Halterippe 17, hinter der die Rastabschnitte 13 beim Zusammenstecken der Steckkupplung und des Rohres 4 aufgrund der elastischen Biegsamkeit der Haltearme 12 und des Kupplungsringteils 14 unter Aufweitung des Kupplungsringteils 14 einrasten können, wie es in Fig. 1 dargestellt ist, um die am Endabschnitt 1a angeschlossene Fluidleitung mit dem Rohr 4 zu verbinden.

Zusätzlich zu den beiden rastnasenförmigen Rastabschnitten 13 bildet der Kupplungsringteil 14 zwei weitere, sich diametral gegenüberliegende, um 90° gegenüber den Rastabschnitten 13 versetzte Rastabschnitte 18, die ebenfalls beim Zusammenstecken von Rohrstück 1 und Rohr 4 über die Halterippe 17 hinweggleiten und hinter dieser einrasten.

Zwischen den Rastabschnitten 13 und 18 des Kupplungsringteils 14 liegende Teile 19 sind etwa kreisbogenförmig, nach außen über den Umkreis der Rastabschnitte 13, 18 vorstehend, gewölbt. Sie ermöglichen das elastische Aufweiten des Kupplungsringteils 14, wenn das Rohrstück 1 und das Rohr 4 zusammengesteckt werden und die Rastabschnitte 13 und 18 über die konische Flanke der Halterippe 17 hinweggleiten und hinter ihrer radialen Flanke einrasten.

Der Kupplungsringteil 14 kann daher zwar mittels eines Spezialwerkzeugs aufgeweitet werden, bis die Rastabschnitte 13 und 18 mit der Halterippe 17 außer Eingriff gelangen, um die Kupplung zu lösen. Von Hand ist es jedoch praktisch nicht möglich, den Kupplungsringteil 14 aufzuweiten und die Kupplung zu lösen, um zu verhindern, daß durch die gelöste Kupplung das durch die Fluidleitung und das Rohr 4 geleitete Fluid unabsichtlich austritt, insbesondere wenn es sich um ein Fluid handelt, das gefährlich oder umweltschädlich ist, wie Kühlwasser, Öl oder Kraftstoff bei einem Kraftfahrzeug.

Abweichend von dem dargestellten Ausführungsbeispiel können auch nur drei Rastabschnitte vorgesehen sein, wenn sie über einen Umfangswinkelbereich von mehr als 180° verteilt sind, vorzugsweise in Winkelabständen von 120°. Es ist aber auch möglich, mehr als vier Rastabschnitte vorzusehen, um die Sicherheit gegen ein manuelles Lösen der Kupplung noch weiter zu steigern.

## Patentansprüche

1. Steckkupplung zum Verbinden einer Fluidleitung mit einem Rohr (4), das eine sich in Umfangsrichtung erstreckende Halterippe (17) aufweist, wobei die Steckkupplung ein Rohrstück (1) aufweist, dessen einer Endabschnitt (1a) mit der Fluidleitung verbindbar ist und dessen anderer Endabschnitt (1b) mit dem Rohr (4) zusammensteckbar und mit einem ersten Kupplungsringteil (9) eines Kupplungsrings (2) verbindbar ist, das durch elastische Haltearme (12) mit einem unrunden, elastisch aufweitbaren zweiten Kupplungsringteil (14) verbunden ist, der über einen vorbestimmten Umfangswinkelbereich eines Umkreises des Rohrstücks (1) verteilte Rastabschnitte (13, 18) aufweist, die beim Zusammenstecken von Rohr (4) und Rohrstück (1) über die Halterippe (17), unter Aufweitung des zweiten Kupplungsringteils (14), hinweggleiten und hinter der Halterippe (17) einrasten, wobei zwischen den Rastabschnitten (13, 18) des zweiten Kupplungsringteils (14) liegende Teile (19) nach außen gewölbt sind, **dadurch gekennzeichnet, daß** der zweite Kupplungsringteil (14) wenigstens drei Rastabschnitte (13, 18) aufweist und der Umfangswinkelbereich größer als 180° ist, und daß die nach außen gewölbten Teile (19) über den Umkreis der Rastabschnitte (13, 18) vorstehen.

2. Steckkupplung nach Anspruch 1, **dadurch gekennzeichnet, daß** vier Rastabschnitte (13, 18) vorgesehen sind.

3. Steckkupplung nach Anspruch 1 oder 2, **dadurch gekennzeichnet, daß** die Rastabschnitte (13, 18) gleichmäßig über den Umfangswinkelbereich verteilt sind.

4. Steckkupplung nach einem der Ansprüche 1 bis 3, **dadurch gekennzeichnet, daß** der Umfangswinkelbereich 360° beträgt.

5. Steckkupplung nach einem der Ansprüche 1 bis 4, **dadurch gekennzeichnet, daß** zwei sich diametral in Bezug auf das Rohrstück (1) gegenüberliegende Haltearme (12) vorgesehen sind, neben deren mit dem zweiten Kupplungsringteil (14) verbundenen Enden jeweils einer der Rastabschnitte (13) in Form von radial nach innen ragenden Rastnasen am Kupplungsringteil (14) angeformt ist.

6. Steckkupplung nach Anspruch 5, **dadurch gekennzeichnet, daß** zwei Rastabschnitte (18), die sich diametral gegenüberliegen, um 90° gegenüber den Rastnasen (13) versetzt als bogenförmige Teile des zweiten Kupplungsringteils (14) ausgebildet sind.

## Claims

1. Plug-in coupling for connecting a fluid line with a pipe (4) which includes a holding rib (17) extending in a circumferential direction, the plug-in coupling comprising a pipe piece (1), one end portion (1a) of which is connectable to the fluid line and the other end portion (1b) of which is adapted to be plugged together with the pipe (4) and connectable to a first coupling ring part (9) of a coupling ring (2), the first coupling ring part (9) being connected through elastic holding arms (12) to a second non-circular elastically expandable coupling ring part (14), wherein the second coupling ring part (14) has snap sections (13, 18) which are distributed over a predetermined circumferential angle range of a circumcircle of the pipe piece (1), wherein, when the pipe (4) and the pipe piece (1) are being plugged together, the snap sections (13, 18) slide over the holding rib (17) and expand the second coupling ring part (14) and snap behind the holding rib (17), wherein components (19) located between the snap sections (13, 18) of the second coupling ring part (14) are arched outwardly, **characterised in that** the second coupling ring part (14) has at least three snap sections (13, 18) and the circumferential angle range is greater than 180°, and that the outwardly arched parts (19) protrude beyond the circumcircle of the snap sections (13, 18).

2. Plug-in coupling according to claim 1, **characterised in that** four snap sections (13, 18) are provided.

3. Plug-in coupling according to claim 1 or 2, **characterised in that** the snap sections (13, 18) are uniformly distributed over the circumferential angle range.

4. Plug-in coupling according to any of the claims 1 to 3, **characterised in that** the circumferential angle range is 360°.

5. Plug-in coupling according to any of the claims 1 to 4, **characterised in that** two holding arms (12) arranged diametrically opposite one another in relation to the pipe piece (1) are provided, wherein adjacent each holding arm (12) end connected to the second coupling ring part (14) one of the snap sections (13) is integrally formed on the coupling ring part (14) in the form of radially inwardly projecting detents.

6. Plug-in coupling according to claim 5, **characterised in that** two snap sections (18), which are located diametrically opposite each other, are located offset by 90° relative to the detents (13) and are configured as arc-shaped components of the second coupling ring part (14).

## Revendications

1. Accouplement par emboîtement pour le raccordement d'une conduite de fluide avec un tube (4) qui présente une nervure de retenue (17) s'étendant dans la direction périphérique, l'accouplement par emboîtement présentant un tronçon tubulaire (1) dont l'une de ses sections d'extrémité (1a) peut être raccordée à la conduite de fluide et dont l'autre section d'extrémité (1b) peut être raccordée par emboîtement avec le tube (4) et avec une première partie annulaire d'accouplement (9) d'un anneau d'accouplement (2), qui est raccordé par des bras de retenue élastiques (12) avec une deuxième partie annulaire d'accouplement (14) expansible élastiquement, non ronde qui, sur une zone angulaire périphérique prédéterminée d'une périphérie du tronçon tubulaire (1), présente des sections d'encliquetage réparties (13, 18) qui, lors de l'emboîtement du tube (4) et du tronçon tubulaire (1) sous l'effet de l'expansion de la seconde partie annulaire d'accouplement (14) glissent par-dessus la nervure de retenue (17) et viennent s'encliqueter derrière la nervure de retenue (17), tandis que les parties (19) situées entre les sections d'encliquetage (13, 18) de la seconde partie annulaire d'accouplement (14) sont courbées vers l'extérieur,
**caractérisé en ce que** la seconde partie annulaire d'accouplement (14) présente au moins trois sections d'encliquetage (13, 18) et la zone angulaire périphérique forme un angle supérieur à 180°, et **en ce que** les parties courbées vers l'extérieur (19) font saillie sur la périphérie des sections d'encliquetage (13, 18).

2. Accouplement par emboîtement selon la revendication 1, **caractérisé en ce qu'**il est prévu quatre sections d'encliquetage (13, 18).

3. Accouplement par emboîtement selon la revendication 1 ou 2, **caractérisé en ce que** les sections d'encliquetage (13, 18) sont réparties de façon uniforme sur la zone angulaire périphérique.

4. Accouplement par emboîtement selon l'une quelconque des revendications 1 à 3, **caractérisé en ce que** la zone angulaire périphérique forme un angle de 360°.

5. Accouplement par emboîtement selon l'une quelconque des revendications 1 à 4, **caractérisé en ce qu'**il est prévu deux bras de retenue (12) situés de façon diamétralement opposée au tronçon tubulaire (1), à côté des extrémités raccordées à la seconde partie annulaire d'accouplement (14), desquels est respectivement rapportée l'une des sections d'encliquetage (13) sous forme de bec d'encliquetage faisant saillie radialement vers l'intérieur sur la partie annulaire d'accouplement (14).

6. Accouplement par emboîtement selon la revendication 5, **caractérisé en ce que** deux sections d'encliquetage (18) diamétralement opposées entre elles, décalées de 90° par rapport aux becs d'encliquetage (13), sont formées en tant que parties arquées de la seconde partie annulaire d'accouplement (14).
